# EUROPÄISCHE PATENTSCHRIFT

(11) **EP 1 619 409 B1**
(45) Veröffentlichungstag und Bekanntmachung des Hinweises auf die Patenterteilung: **23.01.2008**
(21) Anmeldenummer: 05010018.9
(22) Anmeldetag: 09.05.2005
(51) Int. Cl.: F16F 9/02, F16F 9/346, F16F 9/48

(54) **Gasfeder mit Endlagendämpfung**
Gas spring with end-posiiton damping
Ressort à gaz avec amortissement de fin-de-course

(30) Priorität: 22.07.2004 DE 102004035613
(43) Veröffentlichungstag der Anmeldung: 25.01.2006
(73) Patentinhaber: Stabilus GmbH, 56070 Koblenz (DE)
(72) Erfinder: Kneip, Alexander, 56290 Macken (DE); Rössner, Mark, 90518 Altdorf (DE)
(74) Vertreter: Klein, Thomas

(56) Entgegenhaltungen:
- EP-A- 0 198 180
- EP-A- 0 344 785
- EP-A- 0 798 485
- DE-C1- 10 047 433
- DE-U1- 20 107 426
- US-A- 4 230 309
- US-A1- 2003 006 539
- US-B1- 6 681 906

## Beschreibung

Die Erfindung bezieht sich auf eine Gasfeder mit Endlagendämpfung, mit einem mit Druckgas gefüllten Zylinder, in dem eine aus einem Ende des Zylinders abgedichtet herausgeführte Kolbenstange axial verschiebbar angeordnet ist, deren in den Zylinder ragendes Ende fest mit einem in dem Zylinder axial verschiebbaren Kolben verbunden ist, der den Innenraum des Zylinders in eine kolbenstangenseitige erste Arbeitskammer und eine kolbenstangenferne zweite Arbeitskammer trennt, wobei der Kolben einen Dichtungsring besitzt, der mit seiner äußeren radial umlaufenden Mantelfläche in Anlage an der Innenwand des Zylinders sowie radial innen unterströmbar ist und der um ein bestimmtes Spiel axial in einer radial umlaufenden Kolbennut an der radial umlaufenden Mantelfläche des Kolbens zwischen einer der zweiten Arbeitskammer näheren ersten Nutseitenwand und einer der ersten Arbeitskammer näheren zweiten Nutseitenwand verschiebbar ist und wobei die zweite Nutseitenwand mit dem unterströmbaren Bereich des Dichtrings verbundene, permanent offene Durchströmöffnungen besitzt, sowie mit einer oder mehreren an der Innenwand des Zylinders sich über den Verschiebeweg des Kolbens erstreckenden Vertiefungen, deren Querschnitt sich an ihren Enden verringert.

Eine derartige Gasfeder (z.B. aus EP-A-798 485 bekannt) kommt insbesondere bei Türen oder Klappen eines Kraftfahrzeugs zur Anwendung und weist sowohl am Ende des Einschubhubes als auch am Ende des Ausschubhubes eine Endlagendämpfung auf, die ein heftiges Anschlagen in der Endlage und ein Nachwippen vermeidet.

Über den Verschiebeweg erstrecken sich eine oder mehrere Nuten konstanten Querschnitts, die an ihren beiden Enden einen Nutauslauf mit sich verringerndem Querschnitt besitzen. Bei einer Bewegung in Ausschubrichtung der Kolbenstange steht nur der unterströmbare Bereich an der radial inneren Ringfläche des Dichtrings für eine Druckgasströmung von der zweiten Arbeitskammer in die erste Arbeitskammer zur Verfügung. Dieser geringe Durchströmquerschnitt führt dazu, daß die Ausschubgeschwindigkeit der Kolbenstange zunächst gering ist und hohe Beaufschlagungskräfte benötigt.

Aufgabe der Erfindung ist es eine Gasfeder der eingangs genannten Art zu schaffen, die einfach aufgebaut ist und sowohl in Ausschubrichtung als auch in Einschubrichtung mit geringen Beaufschlagungskräften bewegbar ist sowie in beiden Endlagenbereichen dämpft.

Diese Aufgabe wird erfindungsgemäß dadurch gelöst, daß auf der der Kolbenstange abgewandten Seite an dem ersten Kolben in einem Abstand zum ersten Kolben ein zweiter Kolben gleichen Aufbaus wie der erste Kolben angeordnet ist, dessen erste Nutseitenwand der ersten Arbeitskammer und dessen zweite Nutseitenwand der zweiten Arbeitskammer näher ist.

Im ausgeschobenen Zustand befindet sich der an der ersten Nutseitenwand des ersten Kolbens anliegende Dichtring des ersten Kolbens am Ende des Bereichs des verringerten Querschnitts der Vertiefungen in der Innenwand des Zylinders, während sich der Dichtring des zweiten Kolbens noch im oder nahe dem Bereich konstanten Querschnitts der Vertiefungen befindet.

Beim Einschieben der Kolbenstange legt sich der Dichtring an der zweiten Nutseitenwand an. Da die Durchströmöffnungen der zweiten Nutseitenwand offen sind, kann Druckgas von der zweiten Arbeitskammer unter dem Dichtring hindurch in die erste Arbeitskammer strömen und der Kolben sofort umgedämpft und mit geringen Beaufschlagungskräften eingeschoben werden. Bei weiterem Überfahren der Vertiefungen in der Innenwand des Zylinders vergrößert sich dann sofort der Querschnitt, mit dem der Dichtring zusätzlich überströmbar ist.
Im Bereich des zweiten Kolbens steht zumindest weitgehend gleich der maximal mögliche Überströmungsquerschnitt zur Verfügung, so daß hier auch keine Dämpfung erfolgt.

Bei Erreichen des eingeschobenen Zustandes erfolgt eine Dämpfung äquivalent wie bei Erreichen des ausgeschobenen Zustandes.

Ein Ausschieben aus der eingeschobenen Endstellung erfolgt ebenfalls äquivalent ungedämpft wie das Einschieben aus der ausgeschobenen Endstellung.

Um den Abstand zwischen dem ersten Kolben und dem zweiten Kolben zu erhalten, kann zwischen dem ersten Kolben und dem zweiten Kolben ein Distanzstück geringerer radialer Erstreckung als dem Durchmesser der Kolben angeordnet sein.

Eine einfache Befestigungsmöglichkeit der Kolben an der Kolbenstange besteht darin, daß der erste Kolben und der zweite Kolben eine koaxiale Durchgangsbohrung besitzen, mit der sie auf einem Endzapfen der Kolbenstange angeordnet sind.

Dabei ergibt sich auch eine einfache Befestigungsmöglichkeit des Distanzstücks, wenn das Distanzstück eine auf dem Endzapfen der Kolbenstange angeordnete Distanzhülse ist.

Entsprechen der Abstand zwischen der zweiten Nutseitenwand des ersten Kolbens und der ersten Nutseitenwand des zweiten Kolbens und/oder der zweiten Nutseitenwand des zweiten Kolbens und der ersten Nutseitenwand des ersten Kolbens mindestens etwa der Länge der Querschnittsverringerung der Vertiefungen an der Innenwand des Zylinders, so bewirkt der zweite Kolben bei der Einfahrbewegung und der erste Kolben bei der Ausfahrbewegung keine störende Dämpfung.

Um sowohl eine verschleißarme und gute Dichtwirkung gegenüber der Innenwand des Zylinders als auch einen sicheren Verschluß der Durchlässe der ersten Seitenwände zu erreichen, können die Dichtungsringe einen rechteckigen Querschnitt besitzen.

Einfach herstellbar und eine gute Abstützfläche für die Dichtringe bildend ist es, wenn die zweite Nutseitenwand des ersten und/oder des zweiten Kolbens eine Sternscheibe ist, deren zwischen den radial umlaufend angeordneten Zacken des Sterns gebildete Lücken die permanent offenen Durchströmöffnungen bilden.
Sind in dem oder den ersten Kolben eine oder mehrere die Arbeitskammern verbindende düsenartige Verbindungsöffnungen angeordnet, kann zusätzlich Druckgas von der einen zur anderen Arbeitskammer strömen. Außerdem kann der Kolben bis in einen vertiefungsfreien Endbereich des Zylinders eingefahren werden, wobei die düsenartigen Verbindungsöffnungen eine konstante Dämpfung bewirken.

Ist die Verbindungsöffnung in einer Strömungsrichtung absperrbar, so ist ein unterschiedliches Bewegungsverhalten zwischen der Einschubbewegung und der Ausschubbewegung im Bereich konstanten Querschnitts der Vertiefungen in der Innenwand des Zylinders erreichbar.

Dazu kann in einfacher Weise die Verbindungsöffnung durch ein Rückschlagventil absperrbar sein.

Ein unterschiedliches Bewegungsverhalten je nach Bewegungsrichtung ist auch erreichbar, wenn die Durchtrittsquerschnitte der gegenläufig durchströmbaren Verbindungsöffnungen unterschiedlich sind.

Der oder die Kolben können die einen die Verbindungsöffnung bildenden Dämpfkanal aufweisen, dessen eines Ende an der radial umlaufenden Mantelfläche des Kolbens radial nach außen mündet und dessen anderes Ende radial nach außen in den unterströmbaren Bereich an der radial inneren Ringfläche des Dichtrings mündet.

Die Dämpfcharakteristik des Dämpfkanals kann dabei dadurch erreicht werden, daß der Dämpfkanal einen zumindest teilweise labyrinthartigen Verlauf besitzt.

Eine hydraulische Dämpfung in einer Endlage des Kolbens ist dadurch erreichbar, daß die Gasfeder eine zumindest annähernd senkrechte Einbaulage besitzt und die untere Arbeitskammer in ihrem keine Vertiefungen in der Innenwand des Zylinders aufweisenden Endbereich mit einem hydraulischen Fluid, insbesondere mit Öl gefüllt ist.

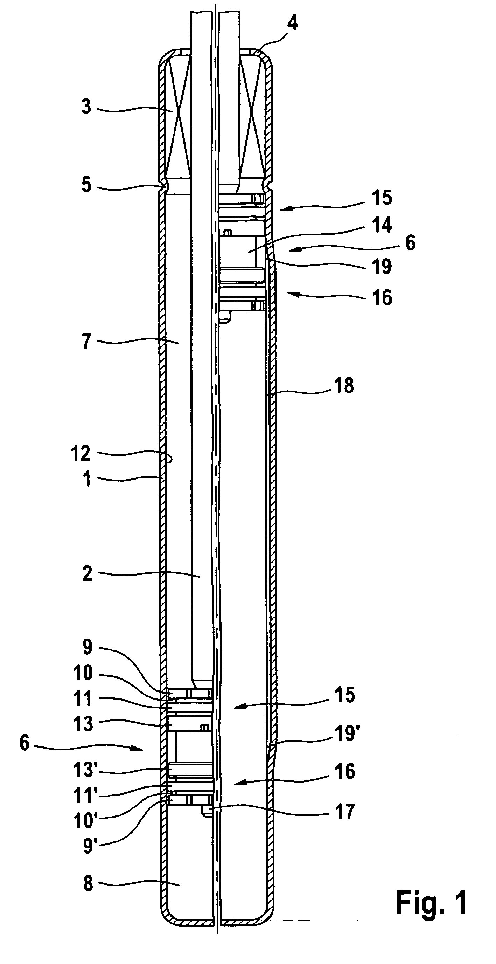

Ausführungsbeispiele der Erfindung sind in der Zeichnung dargestellt und werden im folgenden näher beschrieben. Es zeigen
- Figur 1: einen Längsschnitt einer Gasfeder

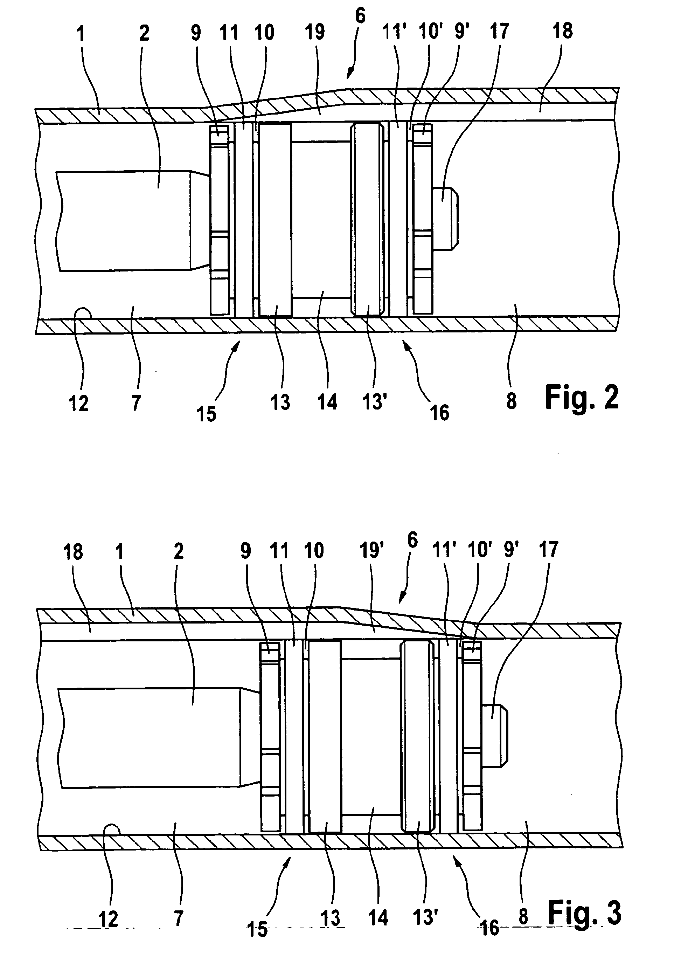

- Figur 2: einen vergrößerten Ausschnitt der Gasfeder nach Figur 1 in ausgeschobener Endlage
- Figur 3: einen vergrößerten Ausschnitt der Gasfeder nach Figur 1 in eingefahrener Endlage
- Figur 4: einen Querschnitt des Zylinders der Gasfeder nach Figur 1
- Figur 5: einen Querschnitt eines zweiten Ausführungsbeispiels eines Zylinders einer Gasfeder
- Figur 6: eine Stirnansicht eines weiteren Ausführungsbeispiels einer ersten Nutseitenwand von der Seite der Distanzhülse
- Figur 7: einem Schnitt durch die erste Nutseitenwand nach Figur 6 entlang der Linie VII-VII in Figur 6.

Die dargestellte Gasfeder besitzt einen Zylinder 1, der an seinem einen Ende geschlossen ist. An seinem anderen Ende ist eine Kolbenstange 2 durch ein Führungsdichtungspaket 3 abgedichtet aus dem Zylinder 1 herausgeführt. Das Führungsdichtungspaket 3 ist an seinem einen Ende durch das radial nach innen umgebördelte Mündungsende 4 des Zylinders 1 und an seinem anderen Ende durch eine radial umlaufende, nach innen gerichtete Sicke 5 des Zylinders 1 axial gesichert.

An dem in den mit Druckgas gefüllten Innenraum des Zylinders 1 ragenden Ende der Kolbenstange 2 ist ein Kolbenpaket 6 befestigt, durch das der Innenraum des Zylinders 1 in eine kolbenstangenseitige erste Arbeitskammer 7 und eine kolbenstangenfeme zweite Arbeitskammer 8 unterteilt ist.

Das Kolbenpaket 6 besteht von der ersten Arbeitskammer 7 zur zweiten Arbeitskammer 8 gesehen aus einem ersten Kolben 15, in dessen radial umlaufender Mantelfläche eine radial umlaufende Kolbennut 10 ausgebildet ist. In der Kolbennut 10 ist ein Dichtungsring 11 rechteckigen Querschnitts angeordnet, der mit seiner äußeren radial umlaufenden Mantelfläche an der Innenwand 12 des Zylinders 1 in Anlage ist.

Zwischen dem Boden der Kolbennut 10 und der inneren radial umlaufenden Mantelfläche des Dichtungsrings 11 ist der Dichtungsring 11 unterströmbar.

Die Kolbennut 10 wird an der der zweiten Arbeitskammer 8 näheren Seite durch eine erste Nutseitenwand 13 begrenzt.

Die der ersten Arbeitskammer 7 nähere Nutseitenwand ist als Sternscheibe 9 ausgebildet, deren zwischen den radial umlaufend angeordneten Zacken gebildeten Lücken radial weiter nach innen ragen, als sich der Boden der Kolbennut 10 befindet.

Bei Einschubbewegung und an der Sternscheibe 9 anliegendem Dichtungsring 11 kann von der zweiten Arbeitskammer 8 unter dem Dichtungsring 11 hindurch Druckgas durch die Lücken der Sternscheibe 9 zur ersten Arbeitskammer 7 strömen.

An die erste Nutseitenwand 13 schließt sich koaxial auf der der Kolbennut 10 abgewandten Seite eine Distanzhülse 14 des Kolbenpakets 6 an, der wiederum koaxial ein zweiter Kolben 16 des Kolbenpakets 6 folgt.

Der zweite Kolben 16 besitzt spiegelbildlich den gleichen Aufbau und die gleiche Ausbildung wie der erste Kolben 15 und weist eine erste Nutseitenwand 13', eine Kolbennut 10' und einen Dichtungsring 11' sowie eine Sternscheibe 9' auf.

Das gesamte Kolbenpaket 6 besitzt eine koaxiale Durchgangsbohrung und ist damit auf einem Endzapfen 17 der Kolbenstange 9 fest angeordnet.

An der Innenwand 12 des Zylinders 10 ist über dem Verschiebeweg des Kolbenpakets 6 eine als Nut 18 ausgebildete Vertiefung konstanten Querschnitts angeordnet, deren Enden Nutausläufe 19 und 19' bildend ihren Querschnitt verringern.

Das aus dem Zylinder 1 herausragende freie Ende der Kolbenstange 2 ist an einem nicht dargestellten beweglichen Teil wie z.B. einer Klappe eines Kraftfahrzeugs angelenkt, während der Zylinder 1 an seinem geschlossenen Ende an einem feststehenden Teil des Kraftfahrzeugs angelenkt ist.

Bei geschlossener Klappe befinden sich Kolbenpaket 6 und Kolbenstange 2 in der eingeschobenen Stellung.

Wird die Klappe geöffnet, bewirkt die größere Wirkfläche des zweiten Kolbens 16 gegenüber der Wirkfläche des ersten Kolbens 15, daß das Kolbenpaket 6 und die Kolbenstange 2 ausgeschoben werden.

Dabei kommt der Dichtungsring 11' an der Sternscheibe 9' zur Anlage, so daß Druckgas aus der ersten Arbeitskammer 7 unter dem Dichtungsring 11' hindurch und durch die Lücken der Sternscheibe 9' zur zweiten Arbeitskammer 8 strömen kann. Im weiteren Bewegungsverlauf wird dann zusätzlich der Dichtungsring 11'im Bereich der Nut 18 überströmt.
Da der erste Kolben 15 sich im Bereich konstanten Querschnitts der Nut 18 befindet, erfolgt bereits dieser Beginn der Ausschubbewegung ungedämpft.

Der Dichtungsring 11 des ersten Kolbens 15 liegt dabei an der ersten Nutseitenwand 13 an. Druckgas kann nur noch über die Nut 18 von der ersten Arbeitskammer 7 zur zweiten Arbeitskammer 8 strömen.

Erreicht der Kolben 15 den Nutauslauf 19, verringert sich der Strömungsquerschnitt, bis er am Ende des Nutauslaufs 19 durch den Dichtungsring 11 völlig geschlossen wird.

Dadurch wird eine Dämpfung des Endes der Ausschubbewegung erreicht.

Bei der Schließbewegung der Klappe und damit dem Einschieben von Kolbenpaket 6 und Kolbenstange 2 erfolgt der gleiche Ablauf wie beim Ausschieben.

Da bereits beim Beginn des Einschubvorganges keine große Dämpfung vorhanden ist, sind nur geringe Handgriffe zum Schließen der Klappe erforderlich.

Eine Dämpfung erfolgt erst wieder zum Ende des Einschubvorganges, so daß auch bei einem gewaltsamen Schließen der Klappe die Geschwindigkeit so weit reduziert wird, daß die Klappe nur mit einer definierten Geschwindigkeit ins Schloß fallen kann.

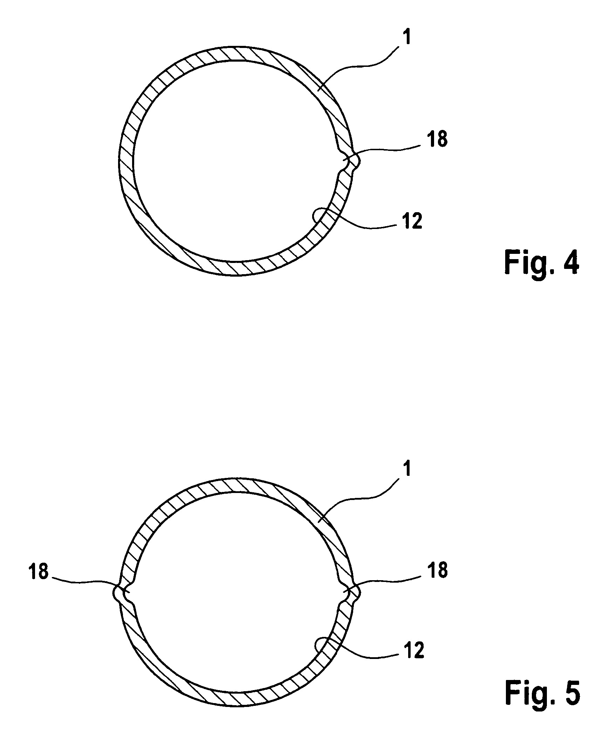

Wie Figur 5 zeigt, können anstatt nur einer Nut 18 auch zwei Nuten 18 an der Innenwand des Zylinders 1 ausgebildet sein.

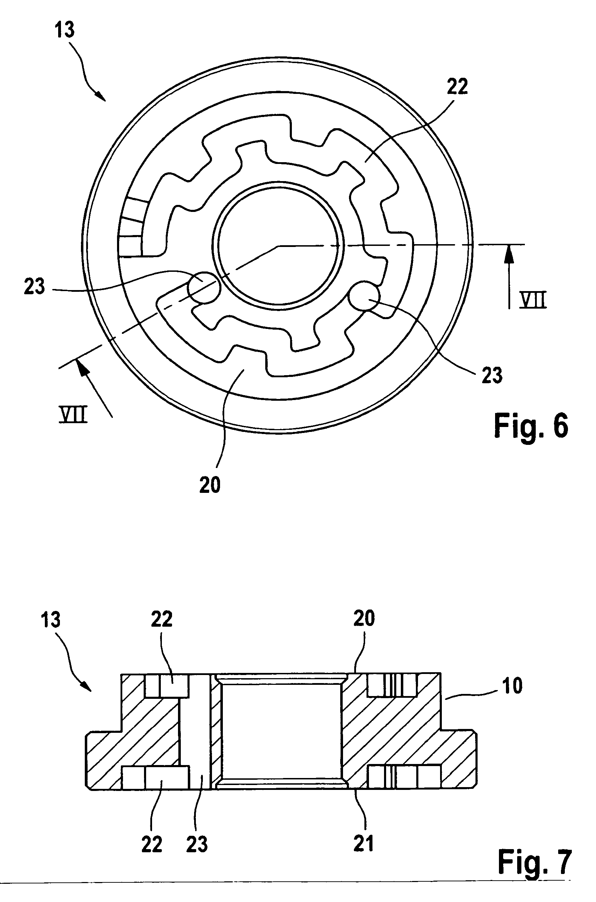

In den Figuren 6 und 7 ist eine erste Nutseitenwand 13 dargestellt, an die sich mit reduziertem Durchmesser ein mit seiner radial umlaufenden Mantelfläche den Boden der Kolbennut 10 bildender zylindrischer Ansatz koaxial anschließt.

In die Stirnseiten 20 und 21 dieses Bauteils sind labyrinthartige, axial offene Nuten eingearbeitet, deren eines Ende verschlossen ist und die durch axiale Bohrungen 23 miteinander verbunden sind. Die Nut an der Stirnseite 20 wird axial durch die Sternscheibe 9 abgedeckt und verschlossen und mündet mit ihrem einen Ende unmittelbar neben der Sternscheibe 9 radial nach außen in den Boden der Kolbennut 10. Das andere Ende dieser Nut ist verschlossen.

Die Nut an der Stirnseite 21 wird axial durch die Distanzhülse 14 abgedeckt und verschlossen und mündet mit ihrem einen Ende an der radial umlaufenden Mantelfläche des Kolbens 13 radial nach außen. Das andere Ende dieser Nut ist ebenfalls verschlossen.

Die Nuten bilden zusammen mit den Bohrungen 23 einem Dämpfkanal 22, durch den Druckgas immer von einer Arbeitskammer zur anderen Arbeitskammer strömen kann.

### Bezugszeichenliste

- 1: Zylinder
- 2: Kolbenstange
- 3: Führungsdichtungspaket
- 4: Mündungsende
- 5: Sicke
- 6: Kolbenpaket
- 7: erste Arbeitskammer
- 8: zweite Arbeitskammer
- 9: Sternscheibe
- 9': Sternscheibe
- 10: Kolbennut
- 10': Kolbennut
- 11: Dichtungsring
- 11': Dichtungsring
- 12: Innenwand
- 13: erste Nutseitenwand
- 13': erste Nutseitenwand
- 14: Distanzhülse
- 15: erster Kolben
- 16: zweiter Kolben
- 17: Endzapfen
- 18: Nut
- 19: Nutauslauf
- 19': Nutauslauf
- 20: Stirnseite
- 21: Stirnseite
- 22: Dämpfkanal
- 23: Bohrungen

## Patentansprüche

1. Gasfeder mit Endlagendämpfung, mit einem mit Druckgas gefüllten Zylinder (1), in dem eine aus einem Ende des Zylinders abgedichtet herausgeführte Kolbenstange (2) axial verschiebbar angeordnet ist, deren in den Zylinder ragendes Ende fest mit einem in dem Zylinder axial verschiebbaren Kolben (15) verbunden ist, der den Innenraum des Zylinders in eine kolbenstangenseitige erste Arbeitskammer (7) und eine kolbenstangenferne zweite Arbeitskammer (8) trennt, wobei der Kolben einen Dichtungsring (11) besitzt, der mit seiner äußeren radial umlaufenden Mantelfläche in Anlage an der Innenwand des Zylinders sowie radial innen unterströmbar ist und der um ein bestimmtes Spiel axial in einer radial umlaufenden Kolbennut (10) an der radial umlaufenden Mantelfläche des Kolbens zwischen einer der zweiten Arbeitskammer näheren ersten Nutseitenwand (13) und einer der ersten Arbeitskammer näheren zweiten Nutseitenwand (9) verschiebbar ist und wobei die zweite Nutseitenwand mit dem permanent unterströmbaren Bereich des Dichtrings verbundene, permanent offene Durchströmöffnungen besitzt, sowie mit einer oder mehreren an der Innenwand des Zylinders sich über den Verschiebeweg des Kolbens erstreckenden Vertiefungen (18), deren Querschnitt sich an ihren Enden verringert, **dadurch gekennzeichnet, daß** auf der der Kolbenstange (2) abgewandten Seite an dem ersten Kolben (15) in einem Abstand zum ersten Kolben (15) ein zweiter Kolben (16) gleichen Aufbaus wie der erste Kolben (15) angeordnet ist, dessen erste Nutseitenwand (13') der ersten Arbeitskammer (7) und dessen zweite Nutseitenwand der zweiten Arbeitskammer (8) näher ist.

2. Gasfeder nach Anspruch 1, **dadurch gekennzeichnet, daß** zwischen dem ersten Kolben (15) und dem zweiten Kolben (16) ein Distanzstück geringerer radialer Erstreckung als dem Durchmesser der Kolben (15, 16) angeordnet ist.

3. Gasfeder nach Anspruch 2, **dadurch gekennzeichnet, daß** der erste Kolben (15) und der zweite Kolben (16) eine koaxiale Durchgangsbohrung besitzen, mit der sie auf einem Endzapfen (17) der Kolbenstange (2) angeordnet sind.

4. Gasfeder nach Anspruch 3, **dadurch gekennzeichnet, daß** das Distanzstück eine auf dem Endzapfen (17) der Kolbenstange (2) angeordnete Distanzhülse (14) ist.

5. Gasfeder nach einem der vorhergehenden Ansprüche, **dadurch gekennzeichnet, daß** der Abstand zwischen der zweiten Nutseitenwand des ersten Kolbens (15) und der ersten Nutseitenwand (13') des zweiten Kolbens (16) und/oder der zweiten Nutseitenwand des zweiten Kolbens (16) und der ersten Nutseitenwand (13) des ersten Kolbens (15) mindestens etwa der Länge der Querschnittsverringerung der Vertiefungen an der Innenwand (12) des Zylinders (1) entsprechen.

6. Gasfeder nach einem der vorhergehenden Ansprüche, **dadurch gekennzeichnet, daß** die Dichtungsringe (11, 11') einen rechteckigen Querschnitt besitzen.

7. Gasfeder nach einem der vorhergehenden Ansprüche, **dadurch gekennzeichnet, daß** die zweite Nutseitenwand des ersten und/oder des zweiten Kolbens (15, 16) eine Sternscheibe (9, 9') ist, deren zwischen den radial umlaufend angeordneten Zacken des Sterns gebildete Lücken die permanent offenen Durchströmöffnungen bilden.

8. Gasfeder nach einem der vorhergehenden Ansprüche, **dadurch gekennzeichnet, daß** in dem oder den ersten Kolben eine oder mehrere axial durchgehende düsenartige Verbindungsöffnungen angeordnet sind.

9. Gasfeder nach Anspruch 8, **dadurch gekennzeichnet, daß** die Verbindungsöffnung in einer Strömungsrichtung absperrbar ist.

10. Gasfeder nach Anspruch 9, **dadurch gekennzeichnet, daß** die Verbindungsöffnung durch ein Rückschlagventil absperrbar ist.

11. Gasfeder nach einem der Ansprüche 8 bis 10, **dadurch gekennzeichnet, daß** die Durchtrittsquerschnitte der gegenläufig durchströmbaren Verbindungsöffnungen unterschiedlich sind.

12. Gasfeder nach einem der Ansprüche 8 bis 11, **dadurch gekennzeichnet, daß** der oder die Kolben einen die Verbindungsöffnung bildenden Dämpfkanal aufweisen, dessen eines Ende an der radial umlaufenden Mantelfläche des Kolbens radial nach außen mündet und dessen anderes Ende radial nach außen in den unterströmbaren Bereich an der radial inneren Ringfläche des Dichtrings mündet.

13. Gasfeder nach Anspruch 12, **dadurch gekennzeichnet, daß** der Dämpfkanal einen zumindest teilweise labyrinthartigen Verlauf besitzt.

14. Gasfeder nach einem der Ansprüche 8 bis 13, **dadurch gekennzeichnet, daß** die Gasfeder eine zumindest annähernd senkrechte Einbaulage besitzt und die untere Arbeitskammer in ihrem keine Vertiefungen in der Innenwand des Zylinders aufweisenden Endbereich mit einem hydraulischen Fluid, insbesondere mit Öl gefüllt ist.

## Claims

1. Gas spring with end position damping, having a cylinder (1) which is filled with pressurized gas and in which a piston rod (2) led out of one end of the cylinder in a sealed-off manner is arranged so as to be axially displaceable, that end of the said piston rod which projects into the cylinder being firmly connected to a piston (15) which is axially displaceable in the cylinder and separates the interior space of the cylinder into a first working chamber (7) on the piston-rod side and a second working chamber (8) remote from the piston rod, the piston having a sealing ring (11) which bears with its outer radially encircling lateral surface against the inner wall of the cylinder and under which flow can occur radially on the inside and which is displaceable axially by a certain clearance in a radially encircling piston groove (10) on the radially encircling lateral surface of the piston between a first groove side wall (13) closer to the second working chamber and a second groove side wall (9) closer to the first working chamber, and the second groove side wall having permanently open throughflow openings connected to that region of the sealing ring under which flow can permanently occur, and having one or more recesses (18) which extend on the inner wall of the cylinder over the displacement path of the piston and whose cross section is reduced at their ends, **characterized in that**, at the first piston (15), on the side remote from the piston rod (2), a second piston (16) of the same construction as the first piston (15) is arranged at a distance from the first piston (15), the first groove side wall (13') of this second piston (16) being arranged closer to the first working chamber (7) and the second groove side wall of this second piston (16) being arranged closer to the second working chamber (8).

2. Gas spring according to Claim 1, **characterized in that** a spacer of smaller radial extent than the diameter of the pistons (15, 16) is arranged between the first piston (15) and the second piston (16).

3. Gas spring according to Claim 2, **characterized in that** the first piston (15) and the second piston (16) have a coaxial through-hole, with which they are arranged on an end stem (17) of the piston rod (2).

4. Gas spring according to Claim 3, **characterized in that** the spacer is a spacer sleeve (14) arranged on the end stem (17) of the piston rod (2).

5. Gas spring according to one of the preceding claims, **characterized in that** the distance between the second groove side wall of the first piston (15) and the first groove side wall (13') of the second piston (16) and/or between the second groove side wall of the second piston (16) and the first groove side wall (13) of the first piston (15) corresponds at least approximately to the length of the cross-sectional reduction of the recesses on the inner wall (12) of the cylinder (1).

6. Gas spring according to one of the preceding claims, **characterized in that** the sealing rings (11, 11') have a rectangular cross section.

7. Gas spring according to one of the preceding claims, **characterized in that** the second groove side wall of the first and/or of the second piston (15, 16) is a star disc (9, 9') whose gaps formed between the star serrations arranged in a radially encircling manner form the permanently open throughflow openings.

8. Gas spring according to one of the preceding claims, **characterized in that** one or more axially continuous nozzle-like connecting openings are arranged in the first piston or pistons.

9. Gas spring according to Claim 8, **characterized in that** the connecting opening can be shut off in one direction of flow.

10. Gas spring according to Claim 9, **characterized in that** the connecting opening can be shut off by a non-return valve.

11. Gas spring according to one of Claims 8 to 10, **characterized in that** the passage cross sections of the connecting openings through which flow can occur in opposite directions are different.

12. Gas spring according to one of Claims 8 to 11, **characterized in that** the piston or pistons has/have a damping channel which forms the connecting opening and whose one end opens radially outwards at the radially encircling lateral surface of the piston and whose other end opens radially outwards into that region at the radially inner annular surface of the sealing ring under which flow can occur.

13. Gas spring according to Claim 12, **characterized in that** the damping channel runs at least partly in a labyrinth-like manner.

14. Gas spring according to one of Claims 8 to 13, **characterized in that** the gas spring has an at least approximately perpendicular fitted position, and the bottom working chamber is filled with hydraulic fluid, in particular with oil, in its end region having no recesses in the inner wall of the cylinder.

## Revendications

1. Ressort à gaz avec amortissement de fin de course, comprenant un cylindre (1) rempli de gaz sous pression, dans lequel est disposée une tige de piston (2) pouvant se déplacer axialement et guidée de manière hermétique hors d'une extrémité du cylindre, dont l'extrémité pénétrant dans le cylindre est connectée fixement à un piston (15) déplaçable axialement dans le cylindre, qui sépare l'espace interne du cylindre en une première chambre de travail (7) du côté de la tige de piston et une deuxième chambre de travail (8) du côté opposé à la tige de piston, le piston présentant une bague d'étanchéité (11) qui est en appui avec sa surface d'enveloppe extérieure radialement périphérique contre la paroi interne du cylindre et qui peut être parcourue par un sous-écoulement radialement vers l'intérieur et qui peut être déplacée suivant un jeu défini axialement dans une rainure de piston (10) radialement périphérique contre la surface d'enveloppe radialement périphérique du piston entre une première paroi latérale de rainure (13) plus proche de la deuxième chambre de travail et une deuxième paroi latérale de rainure (9) plus proche de la première chambre de travail, la deuxième paroi latérale de rainure possédant des ouvertures d'écoulement ouvertes de manière permanente en liaison avec la région de la bague d'étanchéité pouvant être parcourue en permanence par un sous-écoulement, et comprenant un ou plusieurs renfoncements (18) sur la paroi interne du cylindre s'étendant sur la course de déplacement du piston, dont la section transversale se rétrécit à ses extrémités, **caractérisé en ce que**, du côté opposé à la tige de piston (2), un deuxième piston (16) de même structure que le premier piston (15) est disposé sur le premier piston (15) à distance du premier piston (15), et sa première paroi latérale de rainure (13') est proche de la première chambre de travail (7) et sa deuxième paroi latérale de rainure est proche de la deuxième chambre de travail (8).

2. Ressort à gaz selon la revendication 1, **caractérisé en ce qu'**entre le premier piston (15) et le deuxième piston (16) est disposé un élément d'espacement de plus faible étendue radiale que le diamètre du piston (15, 16).

3. Ressort à gaz selon la revendication 2, **caractérisé en ce que** le premier piston (15) et le deuxième piston (16) possèdent un alésage de passage coaxial avec lequel ils sont disposés sur un tourillon d'extrémité (17) de la tige de piston (2).

4. Ressort à gaz selon la revendication 3, **caractérisé en ce que** l'élément d'espacement est une douille d'espacement (14) disposée sur le tourillon d'extrémité (17) de la tige de piston (2).

5. Ressort à gaz selon l'une quelconque des revendications précédentes, **caractérisé en ce que** la distance entre la deuxième paroi latérale de rainure du premier piston (15) et la première paroi latérale de rainure (13') du deuxième piston (16) et/ou la deuxième paroi latérale de rainure du deuxième piston (16) et la première paroi latérale de rainure (13) du premier piston (15) correspondent au moins à approximativement la longueur du rétrécissement de section transversale des renfoncements au niveau de la paroi interne (12) du cylindre (1).

6. Ressort à gaz selon l'une quelconque des revendications précédentes, **caractérisé en ce que** les bagues d'étanchéité (11, 11') possèdent une section transversale rectangulaire.

7. Ressort à gaz selon l'une quelconque des revendications précédentes, **caractérisé en ce que** la deuxième paroi latérale de rainure du premier et/ou du deuxième piston (15, 16) est un disque en étoile (9, 9'), dont les espaces formés entre les dents de l'étoile disposées radialement sur la périphérie forment les ouvertures de passage ouvertes de manière permanente.

8. Ressort à gaz selon l'une quelconque des revendications précédentes, **caractérisé en ce que** l'on dispose dans le ou les premiers pistons une ou plusieurs ouvertures de connexion de type buse axialement continues.

9. Ressort à gaz selon la revendication 8, **caractérisé en ce que** l'ouverture de connexion peut être bloquée dans une direction d'écoulement.

10. Ressort à gaz selon la revendication 9, **caractérisé en ce que** l'ouverture de connexion peut être bloquée par une soupape de non retour.

11. Ressort à gaz selon l'une quelconque des revendications 8 à 10, **caractérisé en ce que** les sections transversales de passage des ouvertures de connexion pouvant être parcourues en sens contraire sont différentes.

12. Ressort à gaz selon l'une quelconque des revendications 8 à 11, **caractérisé en ce que** le ou les pistons présentent un canal d'amortissement formant l'ouverture de connexion, dont une extrémité débouche radialement vers l'extérieur au niveau de la surface d'enveloppe radialement périphérique du piston et dont l'autre extrémité débouche radialement vers l'extérieur dans la région pouvant être parcourue par un sous-écoulement au niveau de la surface annulaire radialement interne de la bague d'étanchéité.

13. Ressort à gaz selon la revendication 12, **caractérisé en ce que** le canal d'amortissement présente une allure au moins partiellement en forme de labyrinthe.

14. Ressort à gaz selon l'une quelconque des revendications 8 à 13, **caractérisé en ce que** le ressort à gaz possède une position de montage au moins approximativement verticale et la chambre de travail inférieure est remplie d'un fluide hydraulique, notamment d'huile, dans sa région d'extrémité ne présentant aucun renfoncement dans la paroi interne du cylindre.
